(19) Europäisches Patentamt
European Patent Office
Office européen des brevets

(11) **EP 4 059 607 B1**

(12) **EUROPÄISCHE PATENTSCHRIFT**

(45) Veröffentlichungstag und Bekanntmachung des Hinweises auf die Patenterteilung:
**06.05.2026 Patentblatt 2026/19**

(21) Anmeldenummer: **21163463.9**

(22) Anmeldetag: **18.03.2021**

(51) Internationale Patentklassifikation (IPC):
**B02C 7/00** (2006.01)   **A23G 1/04** (2006.01)
**B02C 7/12** (2006.01)   **A23G 1/00** (2025.01)
**A23G 1/12** (2006.01)

(52) Gemeinsame Patentklassifikation (CPC):
**B02C 7/00; A23G 1/0033; A23G 1/12; B02C 7/12**

(54) **KOLLOIDMÜHLE**

COLLOID MILL

BROYEUR COLLOÏDAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.09.2022 Patentblatt 2022/38**

(73) Patentinhaber: **Bühler AG**
**9240 Uzwil (CH)**

(72) Erfinder:
• **Zeng, Yuantong**
**9240 Uzwil (CH)**
• **Paggios, Konstantinos**
**8280 Kreuzlingen (CH)**

(74) Vertreter: **Hepp Wenger Ryffel AG**
**Friedtalweg 5**
**9500 Wil (CH)**

(56) Entgegenhaltungen:
EP-A2- 1 207 432    CA-A- 974 980
CN-U- 207 805 709    DE-A1- 4 433 039

**Beschreibung**

Die Erfindung betrifft eine Kolloidmühle, eine Anlage zur Verarbeitung von fettbasierten Massen, ein Verfahren zur Verringerung einer Teilchengröße von in einer ersten Flüssigkeit suspendierten Feststoffen und/oder einer Tröpfchengröße in einer ersten Flüssigkeit emulgierten zweiten Flüssigkeit, einen Rotor und einen Stator.

Aus dem Stand der Technik sind Kolloidmühlen bekannt, um feste und flüssige Stoffe durch eine mechanische Kraft in den Kolloidmühlen in kolloidaler Feinheit zu dispergieren oder Flüssigkeiten in Flüssigkeiten zu emulgieren.

Zum Beispiel werden feste Stoffe, wie Zucker, Milchpulver, Nüsse, Früchte oder Kerne in fetthaltigen Massen, beispielsweise enthaltend Kakaobutter, fein verteilt. Die der Kolloidmühle zugefügten festen und flüssigen Stoffe werden im Rahmen dieser Anmeldung mit Material bezeichnet.

Bekannte Kolloidmühlen umfassen im Wesentlichen ein zylindrisches oder konisches Gehäuse mit einer vertikalen Achse. Sie weisen einen Materialeinlass an einer axialen Seite und einen Produktauslass an der gegenüberliegenden axialen Seite auf. Kolloidmühlen umfassen einen zylindrischen oder konischen Stator, der typischerweise auf der Innenwandoberfläche des Gehäuses gelagert oder einstückig damit ausgebildet ist, und einen koaxial angeordneten Rotor, typischerweise innerhalb des Stators mit eine vertikalen rotierende Welle, die drehbar von dem Gehäuse getragen wird und den Rotor fest und koaxial stützt.

Im Rahmen dieser Erfindung beziehen sich die Begriffe "radial", "axial", "Drehrichtung" und "in Umfangsrichtung" auf die Drehachse des Rotors der Kolloidmühle.

Die Aussenfläche des Rotors und die Innenfläche des Stators sind jeweils mit einander gegenüberliegenden als Rippen ausgeführten Mahlzähnen versehen, die mit abwechselnd dazwischenliegenden Mulden durchsetzt sind, wobei sich die Rippen und Mulden im Wesentlich in axialer Richtung erstrecken und im Querschnitt im Wesentlichen eine rechteckige Formen aufweisen.

Ein mit einer solchen Geometrie ausgebildeter Pulverisierer ist beispielsweise als Stand der Technik in EP0122608A2 gezeigt. Um den Durchsatz und die Zerkleinerungsleistung zu verbessern, wurden Kolloidmühlen mit Mahlzähnen versehen, deren Querschnitt in einer Ebene senkrecht zur Drehachse sägezahnförmig ist, also einen in etwa trapezförmigen oder dreieckigen Querschnitt aufweist.

Mahlvorrichtungen mit derartigen Geometrien sind beispielsweise in CN207805709U, CN 2291205Y, EP0775526A1, EP0605169 A1, EP0497526 A2 und EP0122608A2 offenbart.

Die im Vergleich zur der rechteckigen Form flachen Flanken der Mahlzähne bieten mehr Platz für das Produkt und können daher zu einem erhöhten Durchsatz führen.

Es hat sich gezeigt, dass es bei der Bearbeitung in einer Kolloidmühle zu einer erheblichen Erwärmung des bearbeiteten Materials kommt, was sich negativ auf das Produkt auswirken kann, insbesondere, wenn es sich um ein wärmeempfindliches Lebensmittelprodukt oder ein pharmakologisches Produkt handelt.

Es besteht daher die Aufgabe der Erfindung, die Nachteile des Bekannten zu überwinden und insbesondere eine Kolloidmühle, eine Anlage, ein Verfahren, einen Rotor und einen Stator bereit zu stellen, die eine effiziente Zerkleinerung unter einer möglichst geringen Temperaturerhöhung erlauben.

Die der Erfindung zugrunde liegende Aufgabe wird gelöst durch eine Kolloidmühle, eine Anlage, ein Verfahren, einen Rotor und einen Stator nach den unabhängigen Patentansprüchen.

Die erfindungsgemässe Kolloidmühle dient zur Verringerung einer Teilchengröße von in einer ersten Flüssigkeit suspendierten Partikeln und/oder zur Verringerung einer Tröpfchengröße in einer ersten Flüssigkeit emulgierten zweiten Flüssigkeit, wobei die erste Flüssigkeit insbesondere eine fettbasierte Masse ist.

Bei der fettbasierten Masse kann es sich um Fett oder Öl handeln. Die fettbasierte Masse enthält insbesondere Kakaobutter.

Bei den Partikeln kann es sich um Feststoffe wie Zuckerpartikel, Nüsse, Früchte und/oder Kerne handeln. Die Partikel erfahren in der Kolloidmühle eine Nassvermahlung.

Die Partikel können derart fetthaltig sein, dass keine Flüssigkeit hinzugefügt werden muss, und die kleiner werdenden Partikel in dem eigenen Fett, das als erste Flüssigkeit betrachtet werden kann, emulgiert werden.

Die Kolloidmühle weist mindestens einen Rotor und mindestens einem Stator auf, die koaxial ineinander angeordnet sind. Vorzugsweise ist der Rotor innerhalb des Stators angeordnet oder kann innerhalb des Rotors angebracht werden.

Alternativ ist auch denkbar, dass sich der Rotor um den Stator dreht.

Der Rotor kann eine drehbare Welle aufweisen oder mit einer drehbaren Welle verbindbar sein, die von einer Antriebseinrichtung in Rotation versetzt wird.

Die Kolloidmühle besitzt bevorzugt mindestens einen Materialeinlass zum Einführen von Partikeln, einer Flüssigkeit, einer Suspension und/oder Emulsion an einer ersten axialen Seite und mindestens einen Produktauslass zum Wegführen der Suspension oder Emulsion an einer zweiten axialen Seite. Die Kolloidmühle kann somit in axialer Richtung von dem zu bearbeitenden Material durchströmt werden.

Der Materialeinlass kann trichterförmig ausgeführt sein, so dass das Material unter dem Einfluss der Schwerkraft in den Mahlraum zwischen Rotor und Stator gelangt.

Der mindestens eine Rotor weist eine dem Stator zugewandte oder zuzuwendende Rotormahlfläche auf und/oder der mindestens eine Stator weist eine dem Rotor zugewandte oder zuzuwendende Statormahlfläche auf.

Die Rotormahlfläche weist mindestens einen Mahlzahn mit einer Scherfläche und/oder Scherkante auf, dessen Querschnittsfläche in einer zur Drehachse senkrechten Ebene sich in radialer Richtung zur gegenüberliegenden oder gegenüberliegend anzuordnenden Statormahlfläche hin verjüngt.

Bei einem Mahlzahn handelt es sich um einen erhabenen Bereich, der von einer Bodenfläche des Rotors oder Stators absteht.

Der erhabene Bereich weist eine Fläche und/oder eine Kante auf, die im montierten Zustand zu der gegenüberliegenden Mahlfläche einen kürzesten Abstand besitzt. Diese Fläche und/oder die Kante sorgen für die Scherung des Materials und bilden daher die Scherfläche und/oder Scherkante.

Die Querschnittsfläche besitzt einen, bevorzugt geradlinigen, ersten Schenkel, der sich an eine in Umlaufrichtung verlaufende Grundseite der Querschnittsfläche anschliesst. Der erste Schenkel weist in Drehrichtung des Rotors. Das heisst, der erste Schenkel begrenzt die Seite der Querschnittsfläche, die zu der Drehrichtung hinweist. Bei einer Drehung des Rotors wird der erste Schenkel gegen das in der Kolloidmühle befindliche Material bewegt.

Bevorzugt liegt der erste Schenkel auf einer Seitenfläche des Mahlzahns, die in die Drehrichtung des Rotors weist.

Der erste Schenkel schliesst mit der Grundseite einen Winkel ein, der in einem Bereich von 80°-100°, bevorzugt von 85°-95° liegt. Die Grundseite liegt bevorzugt auf einem Kreis um die Drehachse.

Bevorzugt liegt der erste Schenkel auf einer radialen Linie durch die Drehachse und schliesst mit der Grundseite einen rechten Winkel ein.

Alternativ oder zusätzlich weist die Statormahlfläche mindestens einen Mahlzahn mit einer Scherfläche und/oder Scherkante auf, dessen Querschnittsfläche in einer zur Drehachse senkrechten Ebene sich in radialer Richtung zur gegenüberliegenden oder gegenüberliegend anzuordnenden Rotormahlfläche hin verjüngt.

Die Querschnittsfläche besitzt einen, bevorzugt geradlinigen, zweiten Schenkel, der sich an eine in Umlaufrichtung verlaufende Grundseite der Querschnittsfläche anschliesst. Der zweite Schenkel weist von der Drehrichtung des Rotors weg. Das heisst, der zweite Schenkel begrenzt die Seite der Querschnittsfläche, die von der Drehrichtung weg weist. Der zweite Schenkel kann also bei einer Drehung des Rotors von mitbewegtem Material angeströmt werden.

Bevorzugt liegt der zweite Schenkel auf einer Seitenfläche des Mahlzahns, die von der Drehrichtung des Rotors weg weist.

Der zweite Schenkel schliesst mit der Grundseite einen Winkel ein, der in einem Bereich 80°-100°, insbesondere von 85°-95° liegt. Die Grundseite liegt bevorzugt auf einem Kreis um die Drehachse.

Bevorzugt liegt der zweite Schenkel auf einer radialen Linie durch die Drehachse und schliesst mit der Grundseite einen rechten Winkel ein.

Der Winkel zwischen Schenkel und der gekrümmten Grundseite wird zwischen dem Schenkel und der Tangente gebildet, die am Schnittpunkt von Schenkel und Grundseite an der Grundseite anliegt.

Da sich die Querschnittsfläche des Mahlzahns am Rotor und/oder Stator radial verjüngt, ergibt sich eine asymmetrische Querschnittsfläche. Es gibt keine radiale Linie, gegenüber der eine Spiegelsymmetrie der Querschnittsfläche besteht. Die Querschnittsfläche des Mahlzahns am Rotor und/oder Stator weist eine steile Flanke, nämlich durch den Schenkel, der mit der Grundfläche einen Winkel von 85-95° einschliesst, und eine flache Flanke auf.

Bevorzugt weisen die Rotormahlfläche und/oder die Statormahlfläche eine Mehrzahl von Mahlzähnen auf, die insbesondere in Umfangsrichtung gleiche Abstände haben.

Die Verjüngung der Querschnittsfläche bewirkt, dass sich Rotor und Stator nur auf einem vergleichsweise kleinen Teil der Umfangsfläche sehr nahe kommen. Die Scherkräfte zwischen Rotor und Stator sind daher kleiner als bei einer Kolloidmühle mit herkömmlichen rechteckigen Mahlzahnquerschnittsflächen.

Das Material erwärmt sich daher weniger.

Gleichzeitig sorgen die steilen Flanken für ein effektives Zerkleinern.

Rotor und Stator können so ausgebildet sein, dass die Rotormahlfläche und die Statormahlfläche im Wesentlichen zylindrisch oder konisch ausgebildet sind. Die Kolloidmühle kann so ausgebildet sein, dass die Drehachse im Betrieb vertikal angeordnet ist und die Kolloidmühle von oben nach unten durchströmt werden kann.

Der Radius des Mahlspalts zwischen Rotor und Stator kann in Durchflussrichtung, insbesondere nach unten, grösser werden.

Der oder die Mahlzähne können als Rippe ausgebildet sein und entlang der Stator- und/oder Rotormahlfläche in axialer Richtung auf kürzestem Weg verlaufen oder geneigt sein.

Bei geneigten Mahlzähnen schliesst die Längsausdehnung der Rippe mit einer Umfangslinie senkrecht zur Drehachse oder mit der Drehrichtung einen Winkel von ungleich 90° ein.

Geneigte Mahlzähne begünstigen den Transport des Materials durch die Kolloidmühle.

Die Kolloidmühle kann in axialer Richtung zwei oder mehr Abschnitte unterschiedliche Neigung der Mahlzähne aufweisen. Von einem Abschnitt zum nächstliegenden Abschnitt können sich der Grad der Neigung und/oder die Neigungsrichtung ändern.

Die Kolloidmühle kann in axialer Richtung zwei oder mehr Abschnitte unterschiedlicher Grösse und/oder Dichte der Mahlzähne auf dem Umfang aufweisen.

Bevorzugt weist die Kolloidmühle einen, zwei oder drei Abschnitte auf.

Die Kolloidmühle kann auf der Seite des Materialeinlasses einen axialen Abschnitt aufweisen, in welchem der Rotor keine in Umfangsrichtung geschlossene Rotormahlfläche aufweist. Die Rotorfläche kann in diesem Bereich in Axialrichtung weisende Arme aufweisen, zum Beispiel drei oder mehr Arme, auf denen sich Mahlzähne befinden können.

Die Kolloidmühle weist bevorzugt eine Antriebseinrichtung auf, die für eine Rotorumdrehung von 2500-3500rpm, insbesondere 2900-3000 rpm, bei einer Frequenz von 50Hz, sorgt.

In einer vorteilhaften Ausführungsform bildet die Querschnittsfläche von mindestens einem Mahlzahn ein Mehreck, insbesondere ein Viereck, das eine längere in Umfangsrichtung verlaufende Grundseite und eine zur ersten Grundseite parallele kürzere Grundseite aufweist.

Die Querschnittsfläche ist in diesem Fall annähernd trapezförmig.

Die kürzere Grundseite liegt bevorzugt auf einem Kreis um die Drehachse, weist somit in radiale Richtung. Die kürzere Grundseite der Querschnittsfläche liegt auf einer Scherfläche des Mahlzahns.

Die kürzere Grundseite hat einen Abstand von einer Bodenlinie, die einen Kreis um die Drehachse bildet und auf welcher die grössere Grundseite liegt.

Alternativ oder zusätzlich bildet die Querschnittsfläche von mindestens einem Mahlzahn ein Mehreck. Gemäß der Erfindung bildet die Querschnittfläche von mindestens einem Mahlzahn ein Dreieck, dessen Spitze zur gegenüberliegenden Mahlfläche oder gegenüberliegend anzuordnenden Mahlfläche weist. Die Spitze des Dreiecks liegt auf einer Scherkante des Mahlzahns.

Bei einer Spitze handelt es sich um eine Ecke des Vielecks, an welcher die angrenzenden Seiten ein Winkel von kleiner gleich 90° einschliessen.

Bei dem Dreieck kann es sich um ein rechtwinkliges Dreieck handeln, wobei die Hypotenuse eine flache Flanke der Mahlzahnquerschnittsfläche bildet.

Alternativ sind auch andere Querschnittsflächen denkbar, insbesondere solche, die eine längere, auf einer Bodenlinie der Mahlfläche liegende Grundseite und eine davon beabstandete, insbesondere parallel zur längeren Grundseite verlaufende, kürzere Grundseite aufweisen, welche auf einer Scherfläche liegt, oder solchen, die eine in radiale Richtung weisende Spitze aufweisen.

Die Querschnittsfläche kann zum Beispiel fünfeckig oder mehreckig sein. Die flachere Flanke des Mahlzahns kann facettiert sein.

Der mindestens eine Mahlzahn der Rotor- und/oder Statormahlfläche ist bevorzugt als Rippe ausgebildet, bei welcher die Grösse der Querschnittsfläche entlang ihrer Längsausdehnung konstant bleibt.

Alternativ oder zusätzlich können Querschnittsflächen ihre Grösse entlang der Durchflussrichtung ändern, zum Beispiel in Durchflussrichtung, also in einer Richtung von dem Materialeinlass zu dem Produktauslass, grösser werden.

Die Rippen nehmen dann in Durchflussrichtung zunehmend Platz zwischen Stator und Rotor ein, sodass die Durchgangsfläche für das Material in einer Ebene senkrecht zur Drehachse in Durchflussrichtung abnimmt.

Der kürzeste Abstand zwischen der Rotormahlfläche und der Statormahlfläche kann in einem Bereich von 0.05mm bis 1.2mm liegen.

Der kürzeste Abstand kann als Breite eines Mahlspalts zwischen Rotor und Stator betrachtet werden.

Der kürzeste Abstand zwischen der Rotormahlfläche und der Statormahlfläche liegt zwischen der Scherfläche oder Scherkante des Rotors und der Scherfläche oder Scherkante des Stators.

Bevorzugt liegt der kürzeste Abstand zwischen der Rotormahlfläche und der Statormahlfläche in einer Ebene senkrecht zur Drehachse zwischen der kürzeren Grundseite einer viereckigen Querschnittsfläche oder der Spitze einer dreieckigen Querschnittsfläche am Mahlzahn der Statormahlfläche und der kürzeren Grundseite einer viereckigen Querschnittsfläche oder der Spitze einer dreieckigen Querschnittsfläche am Mahlzahn der Rotormahlfläche.

Der kürzeste Abstand kann in axialer Richtung konstant bleiben oder sich in axialer Richtung verändern, beispielsweise kleiner werden.

Der kürzeste Abstand kann während der Bearbeitung konstant bleiben. Der Mahlspalt kann veränderbar sein, zum Beispiel durch eine gegenseitige axiale Verschiebung von Rotor und Stator.

Bei einer Kolloidmühle mit Querschnittsfläche eines Mahlzahns der Rotor- und der Statormahlfläche mit einer kürzeren Grundseite, die zu einer auf der Bodenlinie liegenden längeren Grundseite parallel verläuft, kann der Wert einer Shearing Surface Rate (SSR) kleiner als 0.25, insbesondere kleiner als 0.07, sein.

Der Wert der Shearing Surface Rate (SSR) gibt das Produkt an aus dem Anteil der kleineren Grundseiten der Querschnittsflächen von Mahlzähnen der Rotormahlfläche an dem Umfang eines Kreises, den eine Bodenlinie der Rotormahlfläche um die Drehachse bildet und dem Anteil der kleineren Grundseiten der Querschnittsflächen von Mahlzähnen an dem Stator an dem Umfang eines Kreises, den die Bodenlinie der Statormahlfläche um die Drehachse bildet.

Eine Shearing Surface Rate (SSR) kann für alle Rotoren und Statoren berechnet werden, die eine in Radialrichtung weisende Scherfläche aufweisen. Deren Mahlzähne besitzen eine Querschnittsfläche mit einer von einer Bodenlinie beabstandeten und in Radialrichtung weisenden Grundseite.

Die Bodenlinie verbindet die Querschnittsflächen der Mahlzähne. Beispielsweise liegen die längeren Grundseiten von Querschnittsvierecken auf dem Kreis, den die Bodenlinie bildet.

Je kleiner der Wert der Shearing Surface Rate (SSR) ist, desto kleiner ist der Bereich in der Kolloidmühle, in welchem Scherung stattfindet und desto weniger erfolgt eine Erwärmung des Materials.

Die Kolloidmühle kann ein Gehäuse aufweisen, das fest mit dem Stator verbunden ist. Die Kolloidmühle kann alternativ ein Gehäuse aufweisen, wobei der Stator und das Gehäuse nicht aus einem Stück gefertigt sind und der Stator insbesondere austauschbar ist. Der Stator kann als Statorinnenmantel ausgebildet sein, der aus dem Gehäuse entfernbar und austauschbar ist. Nach einer Abnutzung kann zum Beispiel der Stator entnommen und in demselben Gehäuse durch einen neuen oder aufgearbeiteten Stator ersetzt werden.

Genauso kann vorgesehen sein, dass der Rotor als Austauschteil vorgesehen ist. Dazu kann die Rotormahlfläche an einem Rotormantel ausgebildet sein, der austauschbar an der Rotorwelle befestigt werden kann. Alternativ kann der Rotor zusammen mit der Welle demontiert und ausgetauscht werden.

Die der Erfindung zugrunde liegende Aufgabe wird ausserdem gelöst durch eine Anlage zur Verarbeitung von Lebensmittelmassen, bevorzugt enthaltend fettbasierte Massen. Di Anlage umfasst eine Kolloidmühle wie oben beschrieben. Die Kolloidmühle ist insbesondere einer Kugelmühle vorgelagert und/oder die Kolloidmühle ist insbesondere einem Mischer nachgeordnet.

Die Anlage kann eine Conche aufweisen, die in Prozessrichtung vor oder nach der Kolloidmühle platziert sein kann.

Die der Erfindung zugrunde liegende Aufgabe wird ausserdem gelöst durch ein Verfahren zur Verringerung der Teilchengröße von in einer ersten Flüssigkeit suspendierten Partikeln und/oder der Tröpfchengrösse von einer in einer ersten Flüssigkeit emulgierten zweiten Flüssigkeit, wobei die erste Flüssigkeit insbesondere eine Fettmasse ist, in einer Kolloidmühle wie sie vorgehend beschrieben ist.

Dabei wird Material zum Bilden einer Suspension oder Emulsion von einem ersten axialen Ende der Kolloidmühle zu dem zweiten axialen Ende der Kolloidmühle zwischen der Rotormahlfläche und der Statormahlfläche entlang geführt.

Die Temperatur des Materials erhöht auf dem Weg durch die Kolloidmühle um weniger als 40°C.

Die Fläche zwischen den Querschnittsflächen zweier in Umfangsrichtung benachbarter Mahlzähne auf der Statormahlfläche und/oder der Rotormahlfläche in einer Ebene senkrecht zur Drehachse kann Platz bieten für die Querschnittsflächen von 3-10 Partikeln und/oder Tröpfchen, wie sie der Kolloidmühle hinzugefügt werden.

Die der Erfindung zugrunde liegende Aufgabe wird ausserdem gelöst durch einen Rotor für Kolloidmühle wie oben beschrieben, wobei der Rotor eine einem Stator zuzuwendende Rotormahlfläche aufweist.

Die Rotormahlfläche weist mindestens einen Mahlzahn mit einer Scherfläche und/oder Scherkante auf, dessen Querschnittsfläche in einer zur Drehachse senkrechten Ebene sich in radialer Richtung, zur im montierten Zustand gegenüberliegenden Statormahlfläche hin, verjüngt.

Die Querschnittsfläche weist einen, bevorzugt geradlinigen, ersten Schenkel auf, der sich an eine in Umlaufrichtung verlaufende Grundseite der Querschnittsfläche anschliesst. Der ersten Schenkel weist in die Drehrichtung des Rotors, welche im montierten Zustand vorgesehen ist. Der ersten Schenkel schliesst mit der Grundseite einen Winkel von 80°-100°, bevorzugt von 85-95°, ein.

Die der Erfindung zugrunde liegende Aufgabe wird ausserdem gelöst durch einen Stator für Kolloidmühle wie oben beschrieben, wobei der Stator eine dem Rotor zuzuwendende Statormahlfläche aufweist. Die Statormahlfläche weist mindestens einen Mahlzahn mit einer Scherfläche und/oder Scherkante auf, dessen Querschnittsfläche in einer zur Drehachse senkrechten Ebene sich in radialer Richtung, zur im montierten Zustand gegenüberliegenden Rotormahlfläche hin, verjüngt. Die Querschnittsfläche weist einen, bevorzugt geradlinigen, zweiten Schenkel auf, der sich an eine in Umlaufrichtung verlaufende Grundseite der Querschnittsfläche anschliesst, der entgegen der Drehrichtung des Rotors, welche im montierten Zustand vorgesehen ist, weist. Der zweiten Schenkel schliesst mit der Grundseite einen Winkel von 80°-100°, bevorzugt von 85-95°ein.

Die Erfindung wird nachfolgend erläutert unter Bezugnahme auf die Beschreibung spezifischer Ausführungsformen und die entsprechenden Zeichnungen.

Es zeigen

Figur 1      eine schematische Darstellung einer Detailansicht eines ersten Beispiels für einen Stator und einen Rotor in Draufsicht;

Figur 2      schematische Darstellungen von Detailansichten in Draufsicht eines zweiten Beispiels für einen Stator und einen Rotor in zwei verschiedenen Positionen zueinander;

| Figur 3 | schematische Darstellungen in Draufsicht von Detailansichten verschiedener Konfigurationen für Mahlzähne auf einem Stator und einem Rotor; |
| Figuren 4a-4e | schematische Darstellungen in Draufsicht weiterer Beispiele für einen Stator und einen Rotor; |
| Figuren 5a-4c | schematische Darstellungen in Draufsicht weiterer Beispiele für einen Stator und einen Rotor; |
| Figur 6a | Ergebnisse für Fliessgeschwindigkeiten, die für zwei Beispielprofile berechnet wurden; |
| Figur 6b | Ergebnisse für Scherraten, die für die Beispielprofile gemäss Figur 6a berechnet wurden; |
| Figur 7a | ein Beispiel für einen Rotor in perspektivischer Ansicht; |
| Figur 7b | ein Beispiel für einen Stator in perspektivischer Ansicht; |
| Figur 8 | eine schematische Ansicht einer Anlage. |

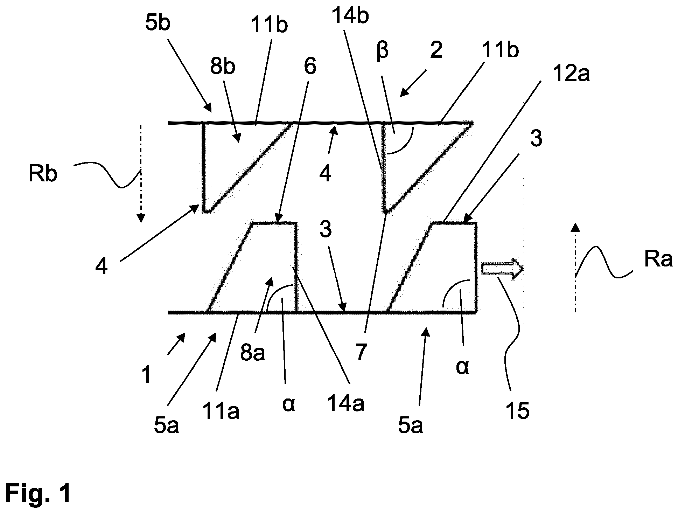

Figur 1 zeigt eine schematische Darstellung einer Detailansicht eines ersten Beispiels für einen Rotor 1 und einen Stator 2 in Draufsicht. Der Rotor 1 und der Stator 2 sind die koaxial ineinander angeordnet, wobei der Rotor 1 innerhalb des Stators 2 angeordnet ist und sich in einer Drehrichtung 15 gegen den Stator 2 dreht.

Der Rotor 1 weist eine dem Stator 2 zugewandte Rotormahlfläche 3 auf und der Stator 2 weist eine dem Rotor 1 zugewandte Statormahlfläche 4 auf.

Die Rotormahlfläche 3 besitzt Mahlzähne 5a mit einer Scherfläche 6, deren Querschnittsflächen 8a in einer zur Drehachse D senkrechten Ebene , wie sie in der Figur gezeigt ist, sich in radialer Richtung (Ra) zur gegenüberliegenden Statormahlfläche 4 hin verjüngt. Die Querschnittsfläche 8a weist einen geradlinigen ersten Schenkel 14a auf, der sich an eine in Umlaufrichtung 15 verlaufenden Grundseite 11a der Querschnittsfläche 8a anschliesst, der in Drehrichtung 15 des Rotors 1 weist. Der erste Schenkel 14a schliesst mit der Grundseite 11a einen Winkel $\alpha$ von 90° ein.

Die Querschnittsflächen 8a der Mahlzähne 5a am Rotor 1 bilden jeweils ein Viereck. Dieses hat eine längere, in Umfangsrichtung verlaufende Grundseite 11a und eine zur ersten Grundseite parallele kürzere Grundseite 12a, die auf der Scherfläche 6 des jeweiligen Mahlzahns 5a liegt.

Die Statormahlfläche 4 weist Mahlzähne 5b mit einer Scherkante 7 auf, deren Querschnittsfläche 8b in einer zur Drehachse (D) senkrechten Ebene sich in radialer Richtung Rb zur gegenüberliegenden Rotormahlfläche 3 hin verjüngt.

Die Querschnittsfläche 8b weist einen geradlinigen zweiten Schenkel 14b auf, der sich an eine in Umlaufrichtung verlaufenden Grundseite 11b der Querschnittsfläche 8b anschliesst. Der zweite Schenkel 14b weist entgegen die Drehrichtung 15 des Rotors (1). Der zweite Schenkel 14b schliesst mit der Grundseite 11b einen Winkel $\beta$ von 90° ein.

Die Querschnittsflächen 8b der Mahlzähne 5b am Stator bilden jeweils ein Dreieck, dessen Spitze in radiale Richtung Rb weist und eine Scherkante 7 bildet.

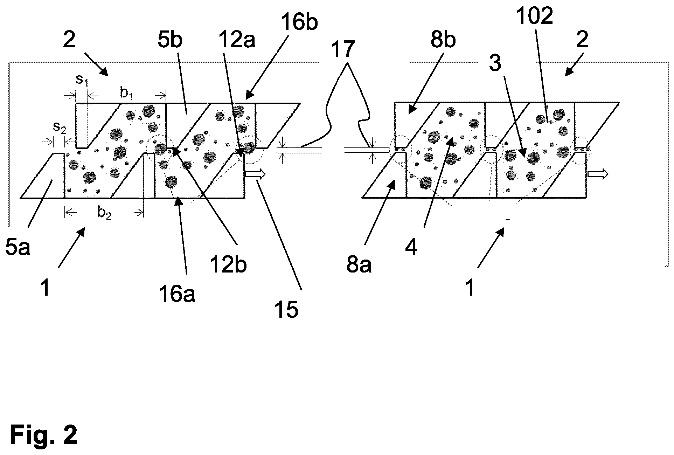

Figur 2 zeigt schematische Darstellungen von Detailansichten in Draufsicht eines zweiten Beispiels für einen Stator 2 und einen Rotor 1 in zwei verschiedenen Positionen zueinander, wobei sich der Rotor 1 beim zweiten Bild in Drehrichtung weiterbewegt hat.

Zwischen Rotor 1 und Stator 2 befindet sich das zu bearbeitende Material 102.

Der Rotor 1 weist Mahlzähne 5a und der Stator Mahlzähne 5b auf, deren Querschnittsflächen in beiden Fällen viereckig sind.

Der kürzeste Abstand 17 zwischen der Rotormahlfläche 3 und der Statormahlfläche 4 ergibt sich durch den Abstand 17 der Mahlzähne 5a und 5b, wenn diese genau gegenüberliegen, wie es dem zweiten Bild gezeigt ist. Da sich die Querschnittsflächen 8a, 8b radial verjüngen, nimmt der Scherspalt, der durch den Bereich definiert wird, in welchem das Material 102 den kürzesten Abstand 17 passieren muss, nur einen vergleichsweise kurzen Längenanteil der gesamten Umfangslinie ein.

Der Wert der Shearing Surface Rate (SSR) gibt das Produkt an aus dem Anteil der kleineren Grundseiten 12a der Querschnittsflächen 8a von Mahlzähnen 5a der Rotormahlfläche 3 an dem Umfang eines Kreises, den eine Bodenlinie 16a der Rotormahlfläche 3 um die Drehachse bildet und dem Anteil der kleineren Grundseiten 12b der Querschnittsflächen 8b von Mahlzähnen 5b an dem Stator 2 an dem Umfang eines Kreises, den die Bodenlinie 16b der Statormahlfläche 4 um die Drehachse bildet.

Wenn die Mahlzähne 5a, 5b gleichmässig über den Umfang verteilt sind, reicht es, nur jeweils einen Mahlzahn 5a, 5b zu betrachten und die Längen s1+b1 und s2+b2, welche den jeweils den Abstand der steilen Flanken beschreiben, wobei s1 und s2 die Länge der kurzen Grundseiten 12a und 12b sind. In diesem Fall ergibt sich die Shearing Surface Rate zu s1/(s1+b1) * s2/(s2+b2).

Ausgehend von der der Shearing Surface Rate SSR kann die Dissipation und der Temperaturanstieg berechnet werden.

Die Dissipation ergibt sich zu

$$\dot{Q}_{diss} = \eta(\dot{\gamma}) \cdot \dot{\gamma}^2 \cdot V_G$$

wobei sich die Scherrate berechnet aus

$$\dot{\gamma} = \frac{4 \cdot \pi \cdot n}{60 \cdot \left(1 - \left(\frac{R_2}{R_1}\right)^2\right)}$$

und das Volumen im Mahlspalt angenommen wird als

$$V_G = \pi \cdot \left(R_1^{\ 2} - R_2^{\ 2}\right) \cdot h \cdot SSR \quad .$$

Eingesetzt ergibt sich

$$\dot{Q}_{diss} = \eta(\dot{\gamma}) \cdot \dot{\gamma}^2 \cdot \pi \cdot \left(R_1^{\ 2} - R_2^{\ 2}\right) \cdot h \cdot SSR$$

Daraus kann der Temperaturanstieg bestimmt werden zu

$$\Delta T = \frac{\dot{Q}_{diss}}{\dot{m} \cdot c_p} \quad .$$

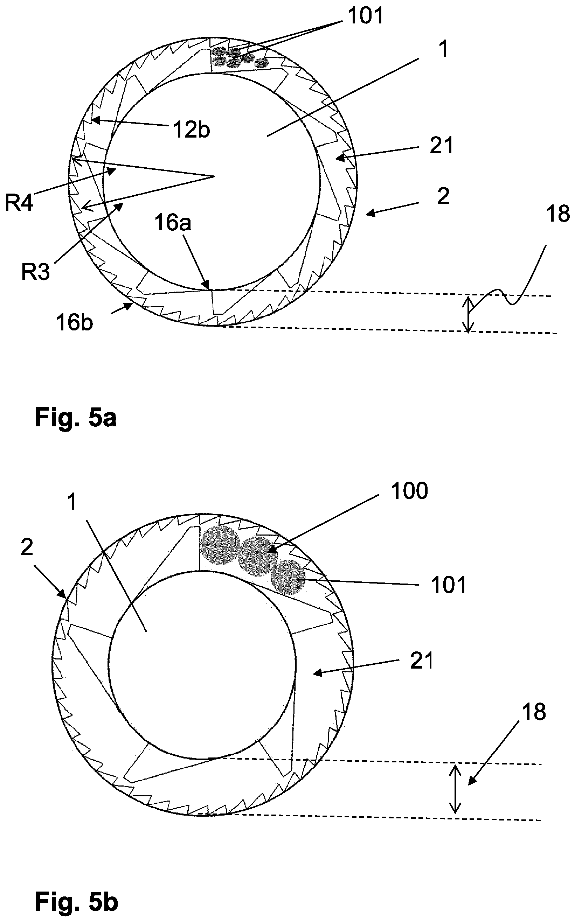

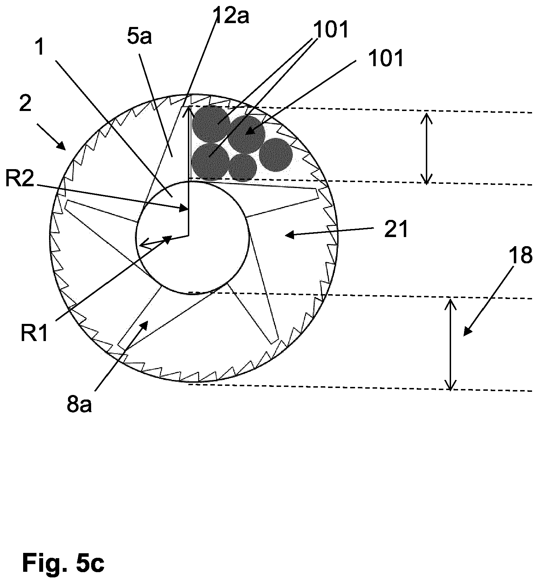

Hierbei sind n die Rotationsgeschwindigkeit in rpm, $R_1$ der Innenradius des Stators in m (siehe Fig. 5c), $R_2$ der Aussenradius des Rotors in m (siehe Fig. 5c), h der kürzestes Abstand 17, die Flussrate in kg/h, $\eta$ die Viskosität der Masse und $c_p$ die spezifische Wärmekapazität in J/kg/K.

Die Temperaturerhöhung hängt also linear von der Shearing Surface Rate ab.

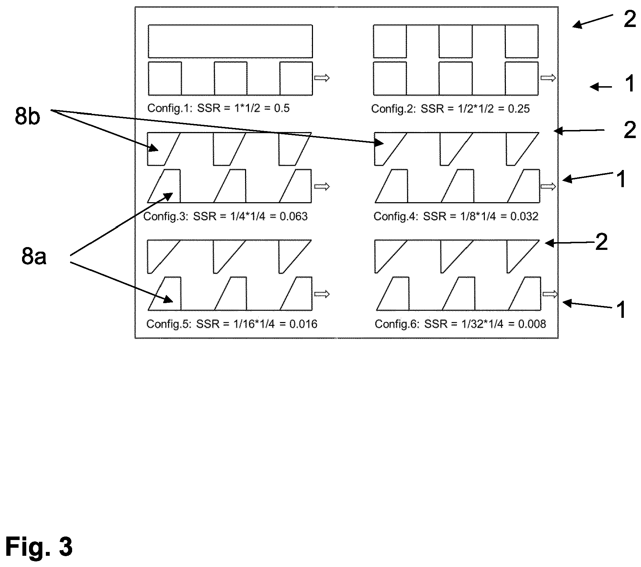

Figur 3 zeigt schematische Darstellungen in Draufsicht von Detailansichten verschiedener Konfigurationen für einen Stator und einen Rotor, wobei für jede Konfiguration in der oberen Hälfte der Stator 2 und in der unteren Hälfte der Rotor 1 dargestellt ist.

Konfigurationen 1 und 2 zeigen herkömmliche Querschnittsflächen von Mahlzähnen, die sich nicht radial verjüngen. Die entsprechenden Werte für die Shearing Surface Rate SSR sind gross.

Je mehr sich die Querschnittsflächen 8a, 8b radial verjüngen, desto kleiner wird der Wert für die Shearing Surface Rate SSR.

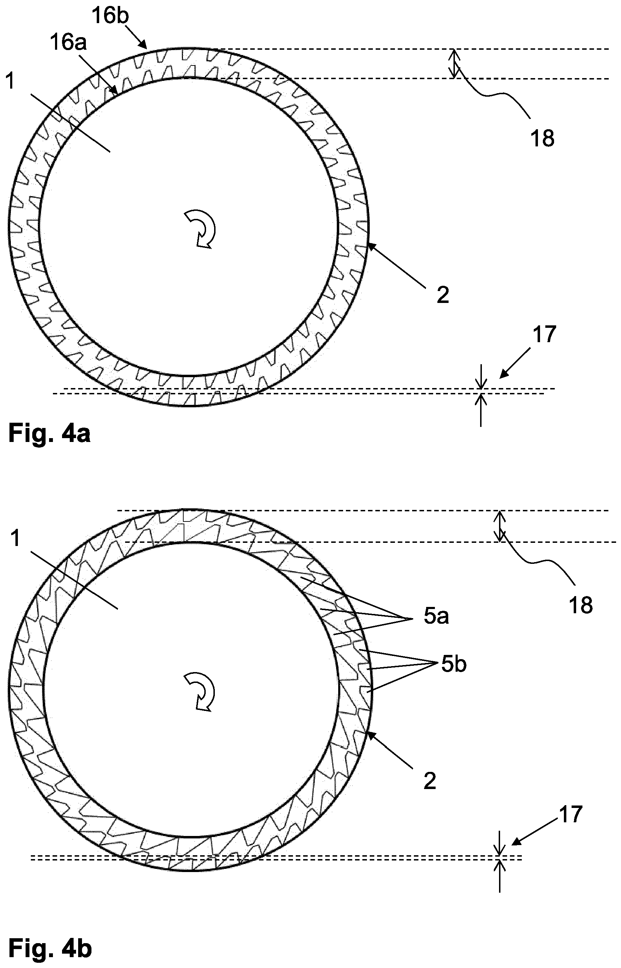

Figuren 4a-4e zeigen schematische Darstellungen in Draufsicht weiterer Beispiele für einen Stator 2 und einen Rotor 1, der koaxial innerhalb des Stators 2 angeordnet ist.

Die Beispiele haben jeweils andere Abstände 18 zwischen den Bodenlinien 16a, 16b, andere kürzeste Abstände 17 zwischen gegenüberliegenden Mahlzähnen 5a, 5b, eine unterschiedliche Anzahl von Mahlzähnen 5a, 5b.

Im Beispiel nach Fig. 4b schliessen sich die Mahlzähne 5a, 5b jeweils ohne Abstand aneinander an.

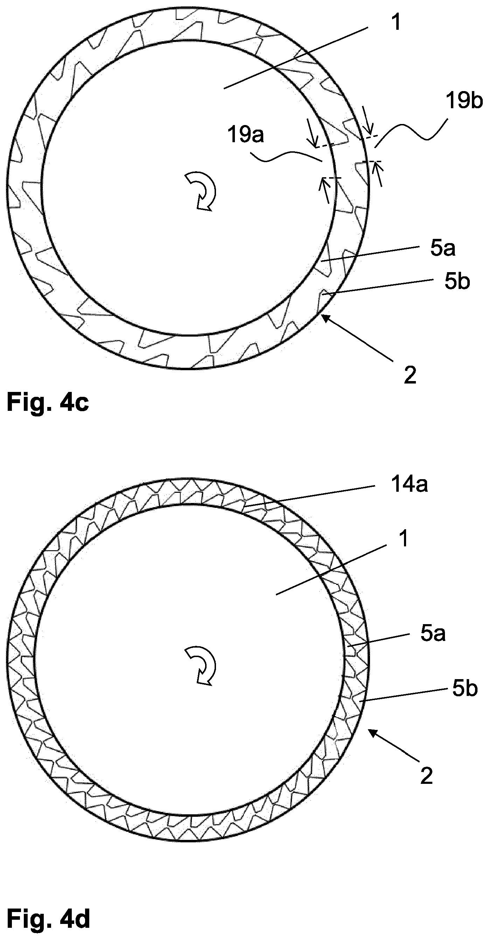

Gemäss Fig. 4c haben die Mahlzähne 5a, 5b jeweils in Umfangsrichtung einen relativ grossen Abstand 19a, 19b voneinander.

Gemäss Fig. 4d bilden nur die Schenkel 14a der Mahlzähne 5a des Rotors 1 eine steile Flanke.

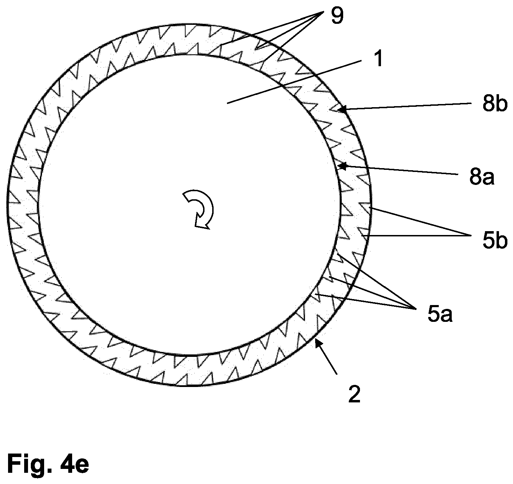

Gemäss Fig. 4e haben die Mahlzähne 5a, 5b des Stators 2 und des Rotors 1 jeweils dreieckige Querschnittsflächen 8a, 8b, deren Spitzen 9 zur jeweils gegenüberliegenden Mahlfläche 3, 4 weisen.

Figuren 5a-4c schematische Darstellungen in Draufsicht weiterer Beispiele für einen Stator 2 und einen Rotor 1.

Der Abstand 18 zwischen den Bodenlinien 16a und 16b (siehe Figur 5a), die Anzahl der Mahlzähne 5a auf dem Rotor 1 und die radiale Ausdehnung 20 der Rotormahlzähne 5a sind so gewählt, dass die Fläche 21 zwischen den Querschnittsflächen 8a zweier in Umfangsrichtung benachbarter Mahlzähnen 5a in einer Ebene senkrecht zur Drehachse, wie sie in den Figuren dargestellt ist, Platz bietet für die Querschnittsflächen 100 von 3-10 Partikeln 101.

Die Querschnittsflächen 8a der Mahlzähne 5a des Rotors umfassen bevorzugt einen Anteil von kleiner 50% an einem Kreisring mit Innenradius $R_3$ und Aussenradius $R_2$, wobei der Innerradius $R_3$ der Abstand der Bodenlinie 16a zur Drehachse ist und der Aussenradius $R_2$ der Abstand der kürzeren Grundseite 12a zur Drehachse ist, also dem Aussenradius des Rotors 1 entspricht (siehe Figur 5c).

Die Querschnittsflächen 8b umfassen bevorzugt einen Anteil von kleiner 50% an einer Kreisring mit Innenradius $R_1$ und Aussenradius $R_4$, wobei der Innerradius $R_1$ der Abstand der der kürzeren Grundseite 12b zur Drehachse ist, somit dem Inneradius des Staors 2 entspricht, und der Aussenradius $R_4$ der Abstand der Bodenlinie 16b zur Drehachse ist (siehe Figur 5a).

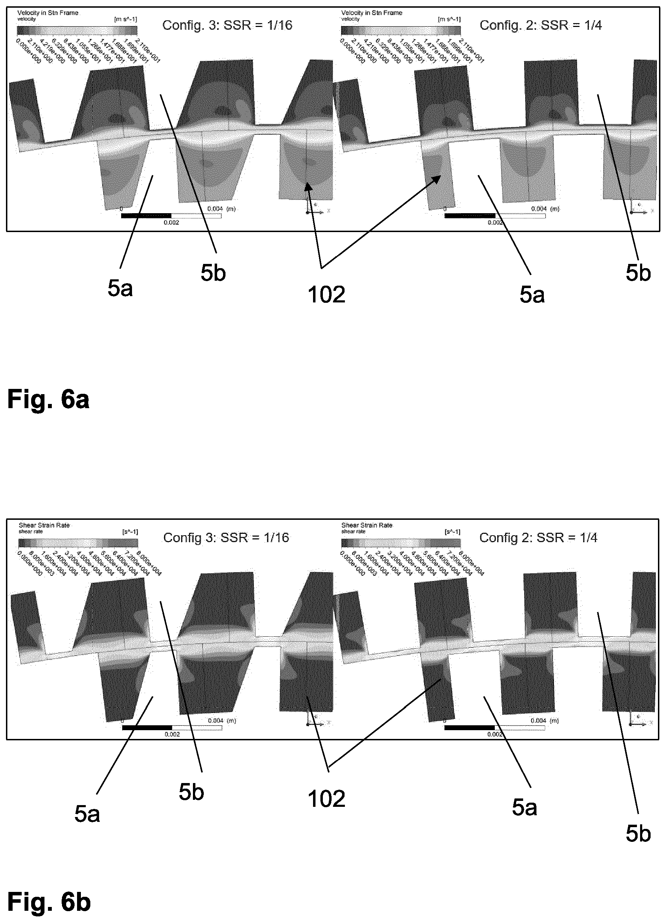

Figur 6a zeigt Ergebnisse für Fliessgeschwindigkeiten von Material 102 zwischen Mahlzähnen 5a, 5b, die für zwei Beispielprofile berechnet wurde. Das linke Bild entspricht der Konfiguration 3 aus Fig. 3, das rechte Bild der Konfiguration 2 aus Fig. 3.

Die Fliessgeschwindigkeiten, die durch unterschiedliche Einfärbung angezeigt sind, wurden durch eine Computersimulation der Fluiddynamik nach dem Herschel-Bulkley Modell gewonnen.

Es zeigt sich, dass mit dem erfindungsgemässen Profil (linkes Bild) und kleinem SSR Wert grössere Gebiete mit höheren Geschwindigkeiten erzielt werden als für ein herkömmliches Profil (rechtes Bild). Das spricht für einen höheren Stoffaustausch und eine bessere Zerkleinerungswirkung.

Figur 6b zeigt Ergebnisse für Scherraten von Material 102 zwischen Mahlzähnen 5a, 5b, die für die Beispielprofile gemäss Figur 6a berechnet wurden.

Die Scherraten, die durch unterschiedliche Einfärbung angezeigt sind, wurden durch eine Computersimulation der Fluiddynamik nach dem Herschel-Bulkley Modell gewonnen.

Es zeigt sich, dass mit dem erfindungsgemässen Profil (linkes Bild) und kleinem SSR Wert kleinere Gebiete mit höheren Scherraten erzielt werden als für ein herkömmliches Profil (rechtes Bild). Das spricht für eine geringere Erwärmung des Materials 102.

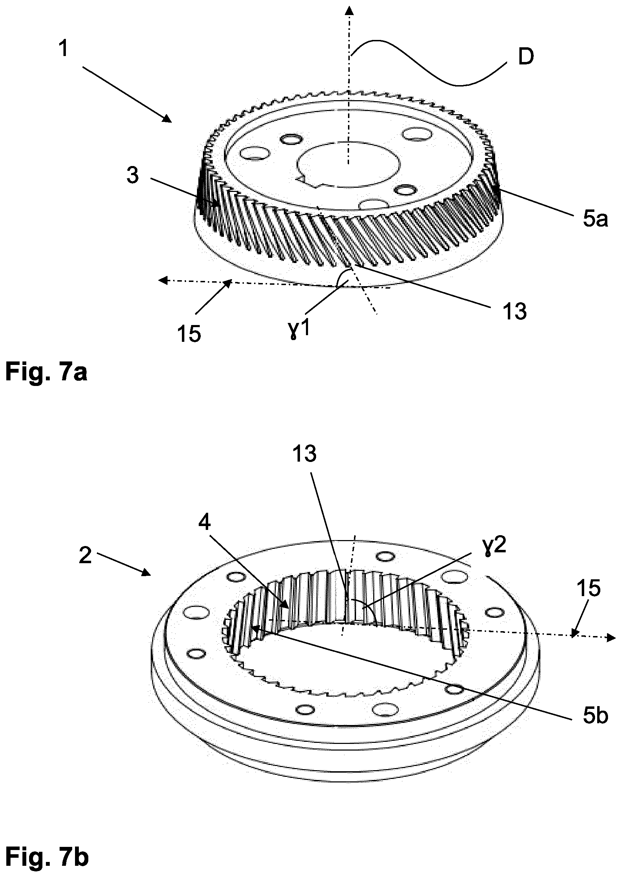

Figur 7a zeigt ein Beispiel für einen Rotor 1 in perspektivischer Ansicht.

Der Rotor 1 hat eine konische Grundform.

Die Mahlzähne 5a auf der Rotormahlfläche 3 sind als Rippen 13 ausgebildet, die mit der Drehrichtung 15 einen Winkel $\gamma$1 von kleiner 90° einschliessen, die also geneigt sind.

Figur 7b zeigt ein Beispiel für einen Stator 2 in perspektivischer Ansicht.

Die Statormahlfläche 4 hat eine konische Grundform.

Die Mahlzähne 5b sind als Rippen 13 ausgebildet, die mit der Drehrichtung 15 einen Winkel $\gamma$2 von kleiner 90° einschliessen.

Die nachfolgende Tabelle 1 zeigt Ergebnisse für die Zerkleinerung von Erdnüssen mit einer konventionellen Kolloidmühle, die Mahlzähne gemäss der Konfiguration 3 aus Fig. 3 aufweist. Erdnüsse weisen einen hohen Fettanteil, etwa 49%, auf, sodass eine Fettzugabe nicht notwendig ist.

Tab. 1

| Prodet | Colloid mill | | Flow rate | Power | Temp. Mass [°C] | | ΔT | T. reduction new vs Old | | Energy consumption [kW/t] |
|---|---|---|---|---|---|---|---|---|---|---|
| | Gap [mm] | rpm | [kg/h] | [kW] | Inlet | Outlet | [°C] | [°C] | [%] | |
| Peanut | 0.45 | 2950 | 624 | 14 | 27 | 67 | 40 | - | - | 22 |
| Peanut | 0.25 | 2950 | 684 | 19 | 27 | 70 | 43 | - | - | 28 |
| Peanut | 0.05 | 2950 | 657 | 19 | 27 | 77 | 50 | - | - | 29 |

Aufgelistet sind der kürzeste Abstand 17oder Mahlspalt (hier "gap" genannt), die Durchflussrate in kg/h (hier "Flowrate" geannt), die Leistung in kW (hier "power" geannt), die Temperatur des Materials am Materialeinlass ("Inlet") und die Temperatur des Materials am Produktauslass ("outlet") in °C, die Differnez dazwischen und ausserdem der Enegeriverbrauch ("energy consumption") in kW/t.

Das Material erwämt sich je nach Mahlspalt um mehr als 40°C.

Die nachfolgende Tabelle 2 zeigt Ergebnisse für die Zerkleinerung von Erdnüssen mit einer erfindungsgemässen Kolloidmühle.

Tab. 2

| Prodet | Colloid mill | | Flow rate | Power | Temp. Mass [°C] | | ΔT | T. reduction new vs Old | | Energy consumption [kW/t] |
|---|---|---|---|---|---|---|---|---|---|---|
| | Gap [mm] | rpm | [kg/h] | [kW] | Inlet | Outlet | [°C] | [°C] | [%] | |
| Peanut | 0.45 | 2950 | 893 | 19 | 27 | 54 | 27 | -13 | -33% | 21 |
| Peanut | 0.25 | 2950 | 1100 | 20 | 27 | 59 | 32 | -11 | -26% | 18 |
| Peanut | 0.25 | 2950 | 1062 | 20 | 27 | 56 | 29 | -14 | -33% | 19 |
| Peanut | 0.05 | 2950 | 850 | 20 | 27 | 61 | 34 | -16 | -32% | 24 |
| Peanut | 0.05 | 2950 | 780 | 20 | 27 | 62 | 35 | -15 | -30% | 26 |

Es sind die gleichen Werte wie in Tabelle 1 aufgetragen und ausserdm noch die Reduktion des Temperaturunterschiedes im Vergleich zur herkömmlichen Kolloidmühle bei gleichem Mahlspalt.
Es ist gut erkenntlich, dass nicht nur eine geringere Erwärmung auftritt, sondern auch eine höherer Druchflusssind eine geringerer Energieverbrach.

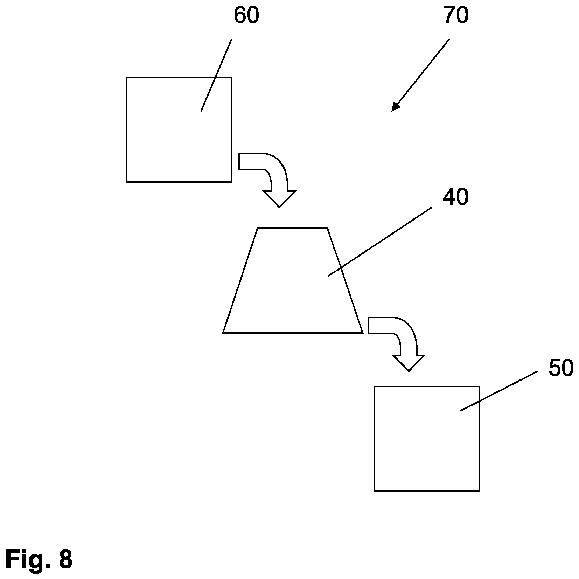

Figur 8 zeigt eine schematische Ansicht einer Anlage 70, die einen Mischer 60, eine Kolloidmühle 40 und eine Kugelmühle 50 umfasst.

**Patentansprüche**

1. Kolloidmühle zur Verringerung einer Teilchengröße (100) von in einer ersten Flüssigkeit suspendierten Partikeln (101) und/oder einer Tröpfchengröße in einer ersten Flüssigkeit emulgierten zweiten Flüssigkeit, wobei die erste Flüssigkeit insbesondere eine fettbasierte Masse ist,

   mit mindestens einem Rotor (1) und mindestens einem Stator (2), die koaxial ineinander angeordnet sind, wobei vorzugsweise der Rotor (1) innerhalb des Stators (2) angeordnet ist oder angebracht werden kann,
   wobei die Kolloidmühle bevorzugt mindestens einen Materialeinlass zum Einführen von Partikeln, einer Flüssigkeit, einer Suspension und/oder Emulsion an einer ersten axialen Seite und mindestens einen Produktauslass zum Wegführen der Suspension oder Emulsion an einer zweiten axialen Seite aufweist,
   wobei der mindestens eine Rotor (1) eine dem Stator (2) zugewandte oder zuzuwendende Rotormahlfläche (3) aufweist und/oder der mindestens eine Stator (2) eine dem Rotor (1) zugewandte oder zuzuwendende Statormahlfläche (4) aufweist,
   wobei die Rotormahlfläche (3), mindestens einen Mahlzahn (5a, 5b) mit einer Scherfläche (6) und/oder Scherkante (7) aufweist, wobei sich die Querschnittsfläche (8a) des Mahlzahns (5a, 5b) in einer zur Drehachse (D) senkrechten Ebene in radialer Richtung (R) zur gegenüberliegenden Statormahlfläche (4) hin verjüngt, wobei die Querschnittsfläche (8a) einen, bevorzugt geradlinigen, ersten Schenkel (14a) aufweist, der sich an eine in Umlaufrichtung verlaufenden Grundseite (11a) der Querschnittsfläche (8a) anschliesst, der in Drehrichtung (15) des Rotors (1) weist, und der mit der Grundseite (11a) einen Winkel ($\alpha$) von 80°-100°, bevorzugt 85°-95°, einschliesst, bevorzugt auf einer radialen Linie durch die Drehachse liegt,
   und/oder
   dass die Statormahlfläche (4), mindestens einen Mahlzahn (5a, 5b) mit einer Scherfläche (6) und/oder Scherkante (7) aufweist, dessen Querschnittsfläche (8b) in einer zur Drehachse (D) senkrechten Ebene sich in radialer Richtung (R) zur gegenüberliegenden Rotormahlfläche (3) hin verjüngt, wobei die Querschnittsfläche (8b) einen, bevorzugt geradlinigen, zweiten Schenkel (14b) aufweist, der sich an eine in Umlaufrichtung verlaufenden Grundseite (11b) der Querschnittsfläche (8b) anschliesst, wobei der zweite Schenkel (14b) entgegen die Drehrichtung (15) des Rotors (1) weist, und der zweite Schenkel (14b) mit der Grundseite (11b) einen Winkel ($\beta$) von 80°-100°, bevorzugt 85°-95°,einschliesst, bevorzugt auf einer radialen Linie durch die Drehachse liegt, und **dadurch gekennzeichnet, dass** die Querschnittsfläche (8a, 8b) von mindestens einem Mahlzahn (5a, 5b) ein Dreieck bildet, dessen Spitze (9) zur gegenüberliegenden Mahlfläche (3, 4) oder gegenüberliegend anzuordnenden Mahlfläche (3, 4) weist, und auf einer Scherkante (7) des Mahlzahns (5a, 5b) liegt.

2. Kolloidmühle nach Anspruch 1, wobei die Querschnittsfläche (8a, 8b) von mindestens einem Mahlzahn (5a, 5b) ein Mehreck, insbesondere Viereck, bildet, das eine längere in Umfangsrichtung verlaufende Grundseite (11a) und eine zur ersten Grundseite parallele kürzere Grundseite (12a) aufweist, die insbesondere auf einer Scherfläche (6) des Mahlzahns liegt.

3. Kolloidmühle nach einem der vorhergehenden Ansprüche, wobei der Mahlzahn (5a, 5b) als Rippe (13) ausgebildet ist mit einer konstant grossen Querschnittsfläche (8a, b) entlang ihrer Längsausdehnung.

4. Kolloidmühle nach einem der vorhergehenden Ansprüche, wobei der kürzeste Abstand (17) zwischen der Rotormahlfläche (3) und der Statormahlfläche (4) zwischen 0.05mm und 1.2mm liegt.

5. Kolloidmühle nach Anspruch 2, wobei der Wert einer Shearing Surface Rate (SSR) kleiner als 0.07 ist, wobei der Wert der Shearing Surface Rate (SSR) das Produkt angibt aus dem Anteil der kleineren Grundseiten (12a) der Querschnittsflächen (8a) von Mahlzähnen (5a) der Rotormahlfläche (3) an dem Umfang eines Kreises, den ein Boden der Rotormahlfläche (3) um die Drehachse bildet, und dem Anteil der kleineren Grundseiten (12b) der Querschnittsflächen (8b) von Mahlzähnen (5b) an dem Stator (2) an dem Umfang eines Kreises, den ein Boden der Statormahlfläche (4) um die Drehachse bildet.

6. Kolloidmühle nach einem der vorhergehenden Ansprüche, wobei die Kolloidmühle ein Gehäuse aufweist, und der Stator (2) und das Gehäuse nicht aus einem Stück gefertigt sind, sodass der Stator (2) insbesondere austauschbar ist.

7. Anlage (70) zur Verarbeitung von Lebensmittelmassen, bevorzugt enthaltend fettbasierte Massen, umfassend eine Kolloidmühle (40) gemäss einem der Ansprüche 1-6, die insbesondere einer Kugelmühle (50) vorgelagert ist und/oder die insbesondere einem Mischer (60) nachgeordnet ist.

8. Verfahren zur Verringerung einer Teilchengröße von in einer ersten Flüssigkeit suspendierten Partikeln und/oder einer Tröpfchengröße in einer ersten Flüssigkeit emulgierten zweiten Flüssigkeit, wobei die erste Flüssigkeit insbesondere eine Fettmasse ist, in einer Kolloidmühle gemäss einem der Ansprüche 1-6,

   wobei Material zum Bilden einer Suspension oder Emulsion von einem ersten axialen Ende der Kolloidmühle zu dem zweiten axialen Ende der Kolloidmühle zwischen der Statormahlfläche und der Rotormahlfläche entlanggeführt wird,
   wobei sich die Temperatur des Materials auf dem Weg durch die Kolloidmühle um weniger als 40°C erhöht.

9. Verfahren nach Anspruch 8, wobei die Fläche zwischen den Querschnittsflächen zweier in Umfangsrichtung benachbarter Mahlzähnen (5a, 5b) auf der Statormahlfläche (4) und/oder der Rotormahlfläche (3) in einer Ebene senkrecht zur Drehachse Platz bietet für die Querschnittsflächen (100) von 3-10 Partikeln (101) und/oder Tröpfchen.

10. Rotor für Kolloidmühle gemäss einem der Ansprüche 1-6, wobei der Rotor (1) eine einem Stator (2) zuzuwendende Rotormahlfläche (3) aufweist, und wobei die Rotormahlfläche (3), mindestens einen Mahlzahn (5a) mit einer Scherfläche (6) und/oder Scherkante (7) aufweist, dessen Querschnittsfläche (8a) in einer zur Drehachse (D) senkrechten Ebene sich in radialer Richtung (R) zur gegenüberliegenden Statormahlfläche (4) hin verjüngt, die Querschnittsfläche (8a) einen, bevorzugt geradlinigen, ersten Schenkel (14a) aufweist, der sich an eine in Umlaufrichtung verlaufenden Grundseite (11a) der Querschnittsfläche (8a) anschliesst, der in Drehrichtung (15) des Rotors (1) weist, und der mit der Grundseite (11) einen Winkel (α) von 85-95° einschliesst, und **dadurch gekennzeichnet, dass** die Querschnittsfläche (8a, 8b) von mindestens einem Mahlzahn (5a, 5b) ein Dreieck bildet, dessen Spitze (9) zur gegenüberliegenden Mahlfläche (3, 4) oder gegenüberliegend anzuordnenden Mahlfläche (3, 4) weist, und auf einer Scherkante (7) des Mahlzahns (5a, 5b) liegt.

11. Stator für eine Kolloidmühle gemäss einem der Ansprüche 1-6, wobei der Stator (2) eine einem Rotor (1) zuzuwendende Statormahlfläche (4) aufweist, und wobei die Statormahlfläche (4), mindestens einen Mahlzahn (5b) mit einer Scherfläche (6) und/oder Scherkante (7) aufweist, dessen Querschnittsfläche (8b) in einer zur Drehachse (D) senkrechten Ebene sich in radialer Richtung (R) zur gegenüberliegenden Rotormahlfläche (3) hin verjüngt, die Querschnittsfläche (8b) einen, bevorzugt geradlinigen, zweiten Schenkel (14b) aufweist, der sich an eine in Umlaufrichtung verlaufenden Grundseite (11b) der Querschnittsfläche (8b) anschliesst, der entgegen der Drehrichtung (15) des Rotors (1) weist, und der mit der Grundseite (11b) einen Winkel (β) von 85-95° einschliesst, und **dadurch gekennzeichnet, dass** die Querschnittsfläche (8a, 8b) von mindestens einem Mahlzahn (5a, 5b) ein Dreieck bildet, dessen Spitze (9) zur gegenüberliegenden Mahlfläche (3, 4) oder gegenüberliegend anzuordnenden Mahlfläche (3, 4) weist, und auf einer Scherkante (7) des Mahlzahns (5a, 5b) liegt.

**Claims**

1. Colloid mill for reducing a particle size (100) of particles (101) suspended in a first liquid and/or a droplet size of a second liquid emulsified in a first liquid, wherein the first liquid in particular is a fat-based mass, with at least one rotor (1) and at least one stator (2), which are arranged coaxially one inside the other, wherein preferably the rotor (1) is arranged or can be mounted inside the stator (2),

   wherein the colloid mill preferably has at least one material inlet for introducing particles, a liquid, a suspension and/or emulsion on a first axial side and at least one product outlet for discharging the suspension or emulsion on a second axial side,
   wherein the at least one rotor (1) has a rotor grinding surface (3) facing or to be faced towards the stator (2) and/or the at least one stator (2) has a stator grinding surface (4) facing or to be faced towards the rotor (1), wherein, the rotor grinding surface (3) has at least one grinding tooth (5a, 5b) with a shearing surface (6) and/or shearing edge (7), wherein the cross-sectional area (8a) of the grinding tooth (5a, 5b) tapers in a plane perpendicular to the axis of rotation (D) in the radial direction (R) towards the opposing stator grinding surface (4), wherein the cross-sectional area (8a) has a, preferably straight, first leg (14a) which adjoins a base side (11a) of the cross-sectional area (8a) extending in the circumferential direction, which points in the direction of rotation (15) of the rotor (1), and which encloses an angle ($\alpha$) of 80°-100°, preferably 85°-95°, with the base side (11a), preferably lies on a radial line through the axis of rotation,

and/or

that the stator grinding surface (4) has at least one grinding tooth (5a, 5b) with a shearing surface (6) and/or shearing edge (7), the cross-sectional area (8b) of which tapers in a plane perpendicular to the axis of rotation (D) in the radial direction (R) towards the opposing rotor grinding surface (3), wherein the cross-sectional area (8b) has a, preferably straight, second leg (14b) which adjoins a base side (11b) of the cross-sectional area (8b) extending in the circumferential direction, wherein the second leg (14b) points counter to the direction of rotation (15) of the rotor (1), and the second leg (14b) encloses an angle ($\beta$) of 80°-100°, preferably 85°-95°, with the base side (11b), preferably lies on a radial line through the axis of rotation, and

**characterized in that**

the cross-sectional area (8a, 8b) of at least one grinding tooth (5a, 5b) forms a triangle, the tip (9) of which points towards the opposing grinding surface (3, 4) or grinding surface (3, 4) to be arranged opposite, and lies on a shearing edge (7) of the grinding tooth (5a, 5b).

2. Colloid mill according to claim 1, wherein the cross-sectional area (8a, 8b) of at least one grinding tooth (5a, 5b) forms a polygon, in particular a quadrilateral, which has a longer base side (11a) extending in the circumferential direction and a shorter base side (12a) parallel to the first base side, which in particular lies on a shearing surface (6) of the grinding tooth.

3. Colloid mill according to one of the preceding claims, wherein the grinding tooth (5a, 5b) is designed as a rib (13) with a constantly sized cross-sectional area (8a, b) along its longitudinal extension.

4. Colloid mill according to one of the preceding claims, wherein the shortest distance (17) between the rotor grinding surface (3) and the stator grinding surface (4) is between 0.05 mm and 1.2 mm.

5. Colloid mill according to claim 2, wherein the value of a Shearing Surface Rate (SSR) is less than 0.07, wherein the value of the Shearing Surface Rate (SSR) indicates the product of the proportion of the shorter base sides (12a) of the cross-sectional areas (8a) of grinding teeth (5a) of the rotor grinding surface (3) to the circumference of a circle that a bottom of the rotor grinding surface (3) forms around the axis of rotation, and the proportion of the shorter base sides (12b) of the cross-sectional areas (8b) of grinding teeth (5b) on the stator (2) to the circumference of a circle that a bottom of the stator grinding surface (4) forms around the axis of rotation.

6. Colloid mill according to one of the preceding claims, wherein the colloid mill has a housing, and the stator (2) and the housing are not manufactured from one piece, such that the stator (2) is in particular exchangeable.

7. Plant (70) for processing food masses, preferably containing fat-based masses, comprising a colloid mill (40) according to one of claims 1-6, which is in particular arranged upstream of a ball mill (50) and/or which is in particular arranged downstream of a mixer (60).

8. Method for reducing a particle size of particles suspended in a first liquid and/or a droplet size of a second liquid emulsified in a first liquid, wherein the first liquid is in particular a fat mass, in a colloid mill according to one of claims 1-6,

wherein material for forming a suspension or emulsion is guided from a first axial end of the colloid mill to the second axial end of the colloid mill between the stator grinding surface and the rotor grinding surface,

wherein the temperature of the material increases by less than 40°C on the way through the colloid mill.

9. Method according to claim 8, wherein the area between the cross-sectional areas of two circumferentially adjacent grinding teeth (5a, 5b) on the stator grinding surface (4) and/or the rotor grinding surface (3) in a plane perpendicular to the axis of rotation provides space for the cross-sectional areas (100) of 3-10 particles (101) and/or droplets.

10. Rotor for a colloid mill according to one of claims 1-6, wherein the rotor (1) has a rotor grinding surface (3) to be faced towards a stator (2),

and wherein the rotor grinding surface (3) has at least one grinding tooth (5a) with a shearing surface (6) and/or shearing edge (7), the cross-sectional area (8a) of which tapers in a plane perpendicular to the axis of rotation (D) in the radial direction (R) towards the opposing stator grinding surface (4), the cross-sectional area (8a) has a, preferably straight, first leg (14a) which adjoins a base side (11a) of the cross-sectional area (8a) extending in the circumferential direction, which points in the direction of rotation (15) of the rotor (1), and which encloses an angle (α) of 85-95° with the base side (11a), and **characterized in that**
the cross-sectional area (8a, 8b) of at least one grinding tooth (5a, 5b) forms a triangle, the tip (9) of which points towards the opposing grinding surface (3, 4) or grinding surface (3, 4) to be arranged opposite, and lies on a shearing edge (7) of the grinding tooth (5a, 5b).

11. Stator for a colloid mill according to one of claims 1-6, wherein the stator (2) has a stator grinding surface (4) to be faced towards a rotor (1), and wherein the stator grinding surface (4) has at least one grinding tooth (5b) with a shearing surface (6) and/or shearing edge (7), the cross-sectional area (8b) of which tapers in a plane perpendicular to the axis of rotation (D) in the radial direction (R) towards the opposing rotor grinding surface (3), the cross-sectional area (8b) has a, preferably straight, second leg (14b) which adjoins a base side (11b) of the cross-sectional area (8b) extending in the circumferential direction, which points counter to the direction of rotation (15) of the rotor (1), and which encloses an angle (β) of 85-95° with the base side (11b), and
**characterized in that**
the cross-sectional area (8a, 8b) of at least one grinding tooth (5a, 5b) forms a triangle, the tip (9) of which points towards the opposing grinding surface (3, 4) or grinding surface (3, 4) to be arranged opposite, and lies on a shearing edge (7) of the grinding tooth (5a, 5b).

**Revendications**

1. Broyeur colloïdal adapté pour réduire une taille (100) de particules (101) en suspension dans un premier liquide et/ou une taille de gouttelette d'un second liquide émulsionné dans un premier liquide, dans lequel le premier liquide étant en particulier une masse à base de graisse, comprenant au moins un rotor (1) et au moins un stator (2), qui sont disposés coaxialement l'un à l'intérieure de l'autre, de préférence dans lequel le rotor (1) est disposé ou peut être monté à l'intérieur du stator (2),

dans lequel le broyeur colloïdal comporte de préférence au moins une entrée de matière pour introduire des particules, un liquide, une suspension et/ou une émulsion sur un premier côté axial et au moins une sortie de produit pour évacuer la suspension ou l'émulsion sur un second côté axial, dans lequel le au moins un rotor (1) présente une surface de broyage de rotor (3) tournée ou destinée à être tournée vers le stator (2) et/ou ledit au moins un stator (2) présente une surface de broyage de stator (4) tournée ou destinée à être tournée vers le rotor (1),
dans lequel,
la surface de broyage de rotor (3) présente au moins une dent de broyage (5a, 5b) avec une surface de cisaillement (6) et/ou une arête de cisaillement (7), dans lequel la surface de section transversale (8a) de la dent de broyage (5a, 5b) se rétrécissant, dans un plan perpendiculaire à l'axe de rotation (D), dans la direction radiale (R) vers la surface de broyage de stator (4) opposée, dans lequel la surface de section transversale (8a) comporte une première branche (14a), de préférence rectiligne, adjacente à un côté de base (11a) de la surface de section transversale (8a) s'étendant dans la direction circonférentielle, lequel est orientée dans le sens de rotation (15) du rotor (1), et forme avec le côté de base (11a) un angle (α) de 80°-100°, de préférence de 85°-95°, et est de préférence situé sur une ligne radiale passant par l'axe de rotation,
et/ou
la surface de broyage de stator (4) comporte au moins une dent de broyage (5a, 5b) avec une surface de cisaillement (6) et/ou une arête de cisaillement (7), dont la surface de section transversale (8b) se rétrécit, dans un plan perpendiculaire à l'axe de rotation (D), dans la direction radiale (R), vers la surface de broyage de rotor (3) opposée, dans lequel la surface de section transversale (8b) comporte une seconde branche (14b), de préférence rectiligne, adjacente à un côté de base (11b) de la surface de section transversale (8b) s'étendant dans la direction circonférentielle, ladite seconde branche (14b) étant orientée à l'encontre du sens de rotation (15) du rotor (1), et la seconde branche (14b) et forme avec le côté de base (11b) un angle (β) de 80°-100°, de préférence de 85°-95°, et est de préférence situé sur une ligne radiale passant par l'axe de rotation, et
**caractérisé en ce que**
la surface de section transversale (8a, 8b) d'au moins une dent de broyage (5a, 5b) forme un triangle, dont la pointe (9) est orientée vers la surface de broyage (3, 4) opposée ou la surface de broyage (3, 4) destinée à être disposée en vis-à-vis, et se trouve sur une arête de cisaillement (7) de la dent de broyage (5a, 5b).

2. Broyeur colloïdal selon la revendication 1, dans lequel la surface de section transversale (8a, 8b) d'au moins une dent de broyage (5a, 5b) forme un polygone, en particulier un quadrilatère, qui présente un côté de base plus long (11a) s'étendant dans la direction circonférentielle et un côté de base plus court (12a) parallèle au premier côté de base, lequel est situé en particulier sur une surface de cisaillement (6) de la dent de broyage.

3. Broyeur colloïdal selon l'une des revendications précédentes, dans lequel la dent de broyage (5a, 5b) est réalisée sous la forme d'une nervure (13) présentant une surface de section transversale (8a, b) de dimensions constantes le long de son extension longitudinale.

4. Broyeur colloïdal selon l'une des revendications précédentes, dans lequel la plus courte distance (17) entre la surface de broyage de rotor (3) et la surface de broyage de stator (4) est comprise entre 0,05 mm et 1,2 mm.

5. Broyeur colloïdal selon la revendication 2, dans lequel la valeur d'un Taux de Surface de Cisaillement (SSR) est inférieure à 0,07, dans lequel la valeur du Taux de Surface de Cisaillement (SSR) représente le produit de la proportion des côtés de base plus courts (12a) des surfaces de section transversale (8a) des dents de broyage (5a) de la surface de broyage de rotor (3) par rapport à la circonférence d'un cercle que forme un fond de la surface de broyage de rotor (3) autour de l'axe de rotation, et de la proportion des côtés de base plus courts (12b) des surfaces de section transversale (8b) des dents de broyage (5b) sur le stator (2) par rapport à la circonférence d'un cercle que forme un fond de la surface de broyage de stator (4) autour de l'axe de rotation.

6. Broyeur colloïdal selon l'une des revendications précédentes, dans lequel le broyeur colloïdal présente un boîtier, et le stator (2) et le boîtier ne sont pas fabriqués d'une seule pièce, de sorte que le stator (2) est en particulier interchangeable.

7. Installation (70) destinée au traitement de masses alimentaires contenant de préférence des masses à base de graisse, comprenant un broyeur colloïdal (40) selon l'une des revendications 1-6, qui est notamment disposée en amont d'un broyeur à billes (50) et/ou qui est notamment disposé en aval d'un mélangeur (60).

8. Procédé de réduction de la taille de particules en suspension dans un premier liquide et/ou de la taille de gouttelette d'un second liquide en émulsion dans un premier liquide, dans lequel le premier liquide est en particulier une masse grasse, dans un broyeur colloïdal selon l'une des revendications 1-6,

dans lequel une matière destinée à former une suspension ou une émulsion est guidée d'une première extrémité axiale du broyeur colloïdal vers la seconde extrémité axiale du broyeur colloïdal entre la surface de broyage de stator et la surface de broyage de rotor,
dans lequel la température de la matière augmente de moins de 40°C lors de son passage à travers le broyeur colloïdal.

9. Procédé selon la revendication 8, dans lequel la surface située entre les surfaces de section transversale de deux dents de broyage (5a, 5b) adjacentes dans la direction circonférentielle sur la surface de broyage de stator (4) et/ou la surface de broyage de rotor (3), dans un plan perpendiculaire à l'axe de rotation, offre une espace pour les surfaces de section transversale (100) de 3 à 10 particules (101) et/ou gouttelettes.

10. Rotor pour un broyeur colloïdal selon l'une des revendications 1-6, dans lequel le rotor (1) présente une surface de broyage de rotor (3) destinée à être tournée vers un stator (2),

et dans lequel la surface de broyage de rotor (3) comporte au moins une dent de broyage (5a) avec une surface de cisaillement (6) et/ou une arête de cisaillement (7), dont la surface de section transversale (8a) se rétrécit, dans un plan perpendiculaire à l'axe de rotation (D), dans la direction radiale (R) vers la surface de broyage de stator (4) opposée, la surface de section transversale (8a) présente une première branche (14a), de préférence rectiligne, adjacente à un côté de base (11a) de la surface de section transversale (8a) s'étendant dans la direction circonférentielle, lequel est orientée dans le sens de rotation (15) du rotor (1), et forme avec le côté de base (11a) un angle (α) de 85-95°, et
**caractérisé en ce que**
la surface de section transversale (8a, 8b) d'au moins une dent de broyage (5a, 5b) forme un triangle, dont la pointe (9) est orientée vers la surface de broyage (3, 4) opposée ou la surface de broyage (3, 4) destinée à être disposée en vis-à-vis, et se trouve sur une arête de cisaillement (7) de la dent de broyage (5a, 5b).

11. Stator pour un broyeur colloïdal selon l'une des revendications 1-6, dans lequel le stator (2) présente une surface de broyage de stator (4) destinée à être tournée vers un rotor (1), et dans lequel la surface de broyage de stator (4) comporte au moins une dent de broyage (5b) avec une surface de cisaillement (6) et/ou une arête de cisaillement (7), dont la surface de section transversale (8b) se rétrécit, dans un plan perpendiculaire à l'axe de rotation (D), dans la direction radiale (R) vers la surface de broyage de rotor (3) opposée, la surface de section transversale (8b) présente une seconde branche (14b), de préférence rectiligne, adjacente à un côté de base (11b) de la surface de section transversale (8b) s'étendant dans la direction circonférentielle, lequel est orientée à l'encontre du sens de rotation (15) du rotor (1), et forme avec le côté de base (11b) un angle (β) de 85-95°, et

**caractérisé en ce que**

la surface de section transversale (8a, 8b) d'au moins une dent de broyage (5a, 5b) forme un triangle, dont la pointe (9) est orientée vers la surface de broyage (3, 4) opposée ou la surface de broyage (3, 4) destinée à être disposée en vis-à-vis, et se trouve sur une arête de cisaillement (7) de la dent de broyage (5a, 5b).

**Fig. 1**

**Fig. 2**

Fig. 3

**Fig. 4a**

**Fig. 4b**

**Fig. 4c**

**Fig. 4d**

**Fig. 4e**

**Fig. 5a**

**Fig. 5b**

**Fig. 5c**

**Fig. 6a**

**Fig. 6b**

1

3

D

5a

13

15

γ1

**Fig. 7a**

13

4

2

γ2

15

5b

**Fig. 7b**

60

70

40

50

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0122608 A2
- CN 207805709 U
- CN 2291205 Y

- EP 0775526 A1
- EP 0605169 A1
- EP 0497526 A2